# EUROPÄISCHE PATENTSCHRIFT

(11) **EP 2 647 456 B1**
(45) Veröffentlichungstag und Bekanntmachung des Hinweises auf die Patenterteilung: **23.01.2019**
(21) Anmeldenummer: 13155973.4
(22) Anmeldetag: 20.02.2013
(51) Int. Cl.: B23B 45/00, B25F 5/00

(54) **Elektrohandwerkzeug mit Spindelstopp**
Electric hand tool with spindle stop
Outil manuel électrique avec arrêt de rotation de broche

(30) Priorität: 04.04.2012 DE 102012205609
(43) Veröffentlichungstag der Anmeldung: 09.10.2013
(73) Patentinhaber: Metabowerke GmbH, 72622 Nürtingen (DE)
(72) Erfinder: Stark, Günther, 72636 Frickenhausen (DE); Reif, Michael, 73278 Schlierbach (DE)
(74) Vertreter: Schmid, Wolfgang

(56) Entgegenhaltungen:
- EP-A2- 1 240 983
- GB-A- 2 420 301
- US-B1- 7 048 107

## Beschreibung

Die Erfindung betrifft ein Elektrohandwerkzeug gemäß dem Oberbegriff des Anspruchs 1, mit einem Spindelstopp. Ein solches Elektrohandwerkzeug ist aus der EP 1 240 983 A2 bekannt.

Ein Spindelstopp bei Elektrohandwerkzeugen dient dazu, beispielsweise für Handbohrmaschinen sicherzustellen, dass eine Werkzeugspindel des Werkzeuges in demjenigen Fall blockiert, in welchem ein Drehmoment nicht wie im üblichen Betrieb des Werkzeuges vom Motor, sondern seitens des werkzeugseitigen Endes, also beispielsweise der Bohrspindel, aufgebracht wird. Dieser Fall tritt insbesondere dann ein, wenn beispielsweise ein Werkzeug gewechselt wird uns seitens eines Bedieners hierzu an einer Überwurfmutter eines Bohrfutters gedreht wird, um beispielsweise einen Bohrer im Backenfutter festzuziehen oder zu lösen. In diesem Fall ist es vorteilhaft, wenn die Werkzeugspindel gegenüber dem vom Bediener aufgebrachten Drehmoment blockiert wird, im das Wechseln des Werkzeuges zu erleichtern.

Aus dem Stand der Technik sind verschiedene Konzepte zur Ausführung derartiger Spindelstopps bekannt.

So wird in der Europäischen Patentanmeldung EP 1955818 A2 eine Werkzeugmaschine mit eines auch als Spindelstopp bezeichneten Mitnahme-/Blockiereinrichtung gezeigt, in welcher eine Blockierung der Werkzeugspindel mittels an einer Klemmfläche festlegbaren Klemmelementen erfolgen kann. Nach der Lehre der genannten Patentanmeldung werden die Klemmelemente, um eine einwandfreie Funktion des Spindelstopps sicherzustellen, mittels federnden Elementen vorpositioniert. Bauartbedingt handelt es sich bei den genannten federnden Elementen jedoch um vergleichsweise dünnwandig ausgeführte Plättchen, welche auf äußere mechanische Einflüsse vergleichsweise empfindlich reagieren. Insbesondere für eine Verwendung in Schlagbohrmaschinen hat sich die in der genannten Schrift gezeigte Lösung vor allem auch deswegen als nachteilig herausgestellt, weil aufgrund der erhöhten mechanischen Beanspruchung im Schlagbetrieb häufig Brüche der genannten federnden Elemente auftreten. Ferner kann es durch die mit der mechanischen Beanspruchung einhergehende starke Erwärmung zur Verformung der Federelemente kommen, wodurch diese außer Funktion gesetzt werden können.

Die vorliegende Erfindung stellt sich somit die Aufgabe, eine Mitnahme-/Blockiereinrichtung, insbesondere einen Spindelstopp für ein Elektrohandwerkzeug anzugeben, welches eine erhöhte mechanische Robustheit aufweist. Ferner stellt sich die vorliegende Erfindung die Aufgabe, eine produktionstechnisch gut handhabbare Mitnahme-/Blockiereinrichtung anzugeben.

Diese Aufgaben werden durch die Vorrichtung mit den in dem unabhängigen Anspruch 1 aufgeführten Merkmalen gelöst. Die Unteransprüche betreffen vorteilhafte Ausführungsformen und Varianten der Erfindung.

Das erfindungsgemäße Elektrohandwerkzeug, das bspw. als Bohr- oder Schraubmaschine ausgebildet sein kann, zeigt ein Gehäuse, eine motorisch antreibbare Antriebseinheit, eine Abtriebseinheit und eine Mitnahme/Blockiereinrichtung. Dabei umfasst die Mitnahme/Blockereinrichtung Klemmkörper, die bspw. als Walzen ausgebildet sein können, sowie zugeordnete gehäusefeste Klemmflächen und mit der Antriebseinheit gekoppelte Mitnahmeelemente. Bei antriebsseitigem Antrieb erfolgt eine Drehmomentübertragung von der Antriebseinheit über die Mitnahmeelemente und über die Klemmkörper auf einen Nocken der Abtriebseinheit, wohingegen bei werkzeugseitigem Antrieb eine Blockierung der Abtriebseinheit unter Klemmung wenigstens eines Klemmkörpers zwischen einem Teil der Abtriebseinheit und der Klemmfläche erfolgt. Erfindungsgemäß ist im Bereich mindestens eines Nockens ein relativ zu dem Nocken verschiebbares Schiebeelement vorhanden, das bei antriebsseitigem Antrieb mittels eines Mitnahmeelementes einen auf der dem Mitnahmeelement gegenüberliegenden Seite des Nockens angeordneten Klemmkörper in einem Abstand von dem Nocken positioniert.

Im Unterschied zum Stand der Technik erfolgt also nach der Lehre der vorliegenden Erfindung die Vorpositionierung des Klemmkörpers nicht über ein federndes, sondern ein vergleichsweise steifes und solides, jedoch bewegliches Element. Damit kann das genannte Schiebelement, da es nicht elastisch bzw. federnd ausgebildet sein muss, gegenüber der aus dem Stand der Technik bekannten Lösung erheblich massiver und damit mechanisch robuster ausgeführt werden, was sich insbesondere im Fall einer Verwendung in einer Schlagbohrmaschine ausgesprochen positiv auf die Lebensdauer der erfindungsgemäßen Mitnahme-/Blockiereinrichtung auswirkt.

Das Schiebeelement ist als Fortsatz am äußeren Umfang einer konzentrisch zur Abtriebseinheit angeordneten Steuerscheibe angeordnet; ferner kann die Steuerscheibe als einstückiger Körper mit ringförmiger Grundform ausgebildet sein.

In einer besonders vorteilhaften Variante der Erfindung sind drei Schiebeelemente gleichmäßig über den äußeren Umfang der Steuerscheibe verteilt angeordnet; auch Varianten mit zwei oder vier Schiebelementen sind denkbar.

Die Klemmflächen sind auf der Innenseite eines gehäusefesten Bremsringes angeordnet; ferner ist der Bremsring einstückig mit einer Rastenscheibe ausgebildet. Das Bauteil aus Bremsring und Rastenscheibe kann insbesondere als einstückiges Sinterteil ausgebildet sein. Auch eine Ausführung als Kaltfließpress- oder Feingussteil ist denkbar. Die beschriebene einstückige Ausführungsform des kombinierten Bauteils aus Bremsring und Rastenscheibe erlaubt insbesondere eine produktionstechnisch vorteilhafte Vormontage der Antriebs-/Blockiereinrichtung mit einem nachfolgenden Einbringen, insbesondere Einpressen in ein Maschinengehäuse.

Nachfolgend wird ein Ausführungsbeispiel der Erfindung anhand der Zeichnung näher erläutert.

Es zeigt:
- Figur 1: in einer geschnittenen, perspektivischen Ansicht eine exemplarische Mitnahme-/Blockiereinrichtung,
- Figur 2: einen Schnitt entlang der Längsachse der erfindungsgemäßen Vorrichtung,
- Figur 3: eine perspektivische Darstellung der erfindungsgemäßen Mitnahme-/Blockiereinrichtung; und
- Figur 4: eine Detaildarstellung einer Steuerscheibe, wie sie in der gezeigten Ausführungsform zur Anwendung kommen kann.

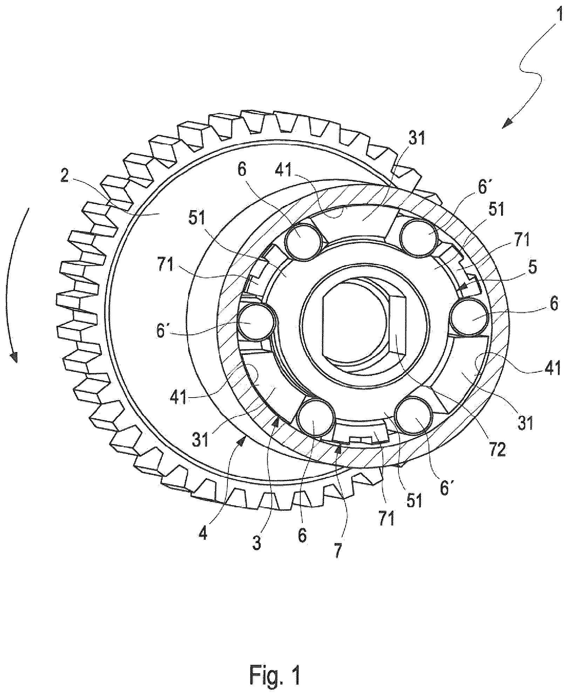

Figur 1 zeigt in einer geschnittenen, perspektivischen Ansicht eine exemplarische Mitnahme-/Blockiereinrichtung 1, bei welcher die Lehre der Erfindung verwirklicht ist. Erkennbar in Figur 1 ist eine mit dem motorseitigen Antrieb in Verbindung stehende Antriebseinheit 2, welche im gezeigten Beispiel als Schiebeblock bzw. Schiebezahnrad ausgebildet ist. Drehfest mit dem Schiebezahnrad 2 verbunden sind als Kupplungsklauen 31 ausgebildete Mitnahmeelemente eines in Figur 1 nicht weiter sichtbaren Kupplungsstückes 3, welche im vorliegenden Beispiel einen kreisringsegmentförmigen Querschnitt zeigen und damit einerseits an den Innenradius eines drehfest mit einem nicht dargestellten Maschinengehäuse verbundenen Bremsrings 4 angepasst sind und andererseits dem Außenradius einer Steuerscheibe 5 korrespondieren. Den Kupplungsklauen 31 benachbart sind als Walzen ausgebildete Klemmkörper 6,6' wobei die Achsrichtungen der Walzen 6,6' parallel zur Drehachse des Schiebezahnrads 2 verlaufen. Im weiteren Verlauf des Innenumfangs des Bremsrings 4 sind benachbart zu den Walzen 6 Nocken 71 einer als Mitnehmer 7 ausgebildeten Abtriebseinheit angeordnet, welche ihrerseits drehfest mit einer Bohrspindelaufnahme 72 verbunden sind. Der Mitnehmer 7 ist dabei in der Weise ausgebildet, dass sich zwischen der Außenseite des Mitnehmers 7 und der Innenseite des Bremsrings 4 jeweils zwischen zwei Nocken 71 des Mitnehmers 7 ein Spalt ausbildet, der sich zur Mitte des Bereiches zwischen zwei Nocken 71 hin auf eine Breite verschmälert, die kleiner ist als der Durchmesser der Walzen 6, 6'. Die Bohrspindelaufnahme 72 ist im vorliegenden Beispiel als Zweikant ausgebildet, der beispielsweise eine Bohrspindel/Abtriebsspindel mit einem darauf angeordneten Bohrfutter oder Ähnliches aufnehmen kann. Ferner sind im Bereich der Nocken 71 als Fortsätze 51 der Steuerscheibe 5 ausgebildete Schiebeelemente angeordnet. Dabei erstrecken sich die Schiebeelemente 51 in radialer Richtung etwa bis zur Drehachse der Walzen 6 und sind im Hinblick auf ihren Umfangsabschnitt etwas länger ausgebildet als der jeweilige korrespondierende Abschnitt des Innenumfangs der Nocken 71.

Im Betrieb wird durch einen elektromotorischen Antrieb das Schiebezahnrad 2 in Rotation versetzt, wodurch aufgrund der bereits erwähnten drehfesten Verbindung auch das Kupplungsstück 3 mit den Kupplungsklauen 31 um die Drehachse des Schiebezahnrads 2 rotiert. Im vorliegenden Beispiel rotiert das Schiebezahnrad 2 in Pfeilrichtung. Damit werden aufgrund der drehfesten Verbindung mit dem Schiebezahnrad 2 auch die Kupplungsklauen 31 in die entsprechende Richtung gedreht. Sie wirken dabei auf die Walzen 6 und drücken diese gegen die drehfest über den Mitnehmer 7 mit der Bohrspindelaufnahme 72 verbundenen Nocken 71, so dass im Ergebnis eine Rotation der Bohrspindelaufnahme 72 bzw. des darin aufgenommenen Werkzeugs entsteht.

Ferner üben die Walzen 6 auch ein Drehmoment auf die verdrehbar koaxial zum Schiebezahnrad 2 gelagerte Steuerscheibe 5 aus, wodurch mittels der Fortsätze 51 die auf der gegenüberliegenden Seite des jeweiligen Nockens 71 angeordneten Walzen 6' in einem gewissen Abstand von dem Mitnehmer Nocken 71 positioniert werden. Im vorliegenden Beispiel führt die Gestaltung der Steuerscheibe 5 dazu, dass die drei Walzen 6' nicht an der Drehmomentenübertragung teilnehmen, sondern, durch den jeweiligen Fortsatz 51 der Steuerscheibe 5 entsprechend positioniert, in einem gewissen Abstand von den Nocken 71 locker mitgedreht werden. Durch diese Maßnahme wird verhindert, dass die Walzen 6' aufgrund der Fettfüllung der Mitnahme-/Blockiereinrichtung 1 an dem ihnen jeweils zugeordneten Nocken 71 anhaften. Wenn nun ein Drehmoment von der Werkzeugseite her ausgeübt wird, bestehen die folgenden beiden Möglichkeiten:
- Das Drehmoment wird entgegen der bisherigen Werkzeugdrehrichtung ausgeübt.
   In diesem Fall sind die drei Walzen 6' bereits so vorpositioniert, dass sie sich bei einer Drehung entgegen der bisherigen Drehrichtung in den sich verschmälernden Spalt zwischen Bremsringinnenseite und Mitnehmeraußenseite bewegt werden, wo sie schließlich an einer Klemmfläche 41 an der Innenseite des Bremsrings 4 festklemmen und eine weitere Bewegung blockieren.
- Das Drehmoment wird in Richtung der bisherigen Bewegungsrichtung ausgeübt:
   Durch die drehbewegliche Steuerscheibe 5 wird ein Ablösen der Walzen 6 von den jeweiligen Anlageflächen an den Nocken 71 unterstützt, so dass auch in diesem Fall die Walzen 6 in den sich verengenden Spalt zwischen Außenseite des Mitnehmers 7 und Innenseite des Bremsrings 4 bewegt werden, wo sie schließlich zu einer Blockade der weiteren Drehbewegung führen.

Im Ergebnis wird in beiden Fällen, in welchem von der Werkzeugseite her ein Drehmoment ausgeübt wird, eine Klemmung herbeigeführt, so dass eine weitere Drehung nicht möglich ist. Damit wird es möglich, ein Werkzeug bspw. in einem Bohrfutter entweder festzuziehen oder auch zu lösen, ohne dass die Werkzeugspindel zusätzlich - also von außen - blockiert werden muss.

Eine auf die Blockierung folgende antriebsseitige Bewegung hebt dabei - gleichgültig in welche Richtung sie erfolgt - die Klemmung wieder auf.

Gut erkennbar in Figur 1 wird die vergleichsweise robuste Ausführung der Mitnahme/Blockiereinrichtung 1, die im Unterschied zum Stand der Technik ohne federnde und damit vergleichsweise dünne und bruchanfällige Elemente auskommt. Diese robuste Ausführung der erfindungsgemäßen Mitnahme/Blockiereinrichtung 1 hat zur Folge, dass sie vorteilhaft auch insbesondere bei Schlagbohrmaschinen eingesetzt werden kann, ohne dass es zu einer nachteiligen Beeinflussung der Lebensdauer der Mitnahme/Blockiereinrichtung 1 aufgrund häufigen Schlagbetriebs kommt.

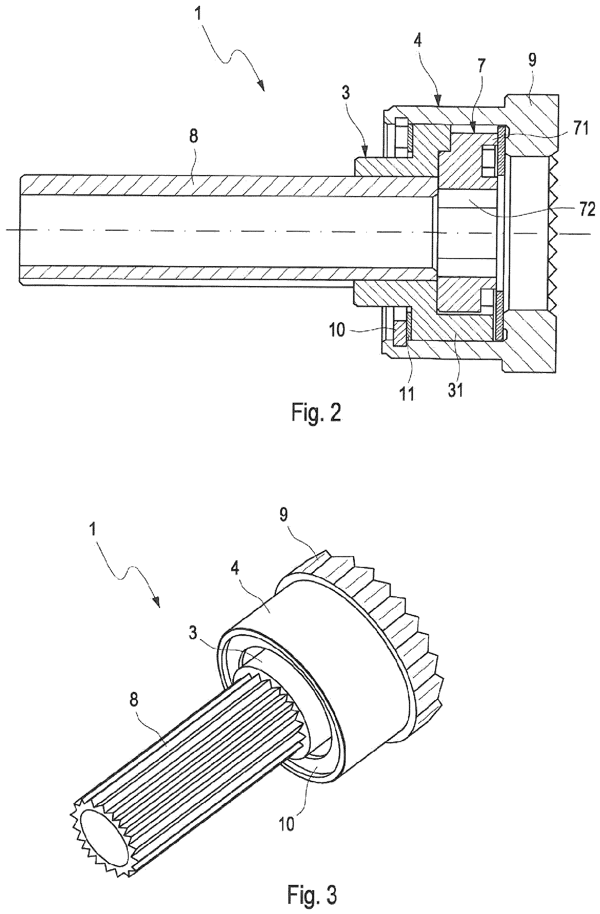

In Figur 2 ist zur weiteren Erläuterung ein Schnitt entlang der Längsachse der erfindungsgemäßen Vorrichtung dargestellt. Erkennbar in Figur 2 ist eine längsverzahnte Hülse 8, auf der das in der Figur 2 nicht dargestellte Schiebezahnrad axial beweglich, aber drehfest mit dieser verbunden angeordnet ist. Durch das Schiebezahnrad wird das Antriebsdrehmoment auf die längsverzahnte Hülse 8 und damit im Ergebnis auf die nicht dargestellte Werkzeugspindel bzw. Bohrspindel übertragen. Ebenfalls drehfest mit der längsverzahnten Hülse 8 verbunden, insbesondere mit dieser verpresst ist das Kupplungstück 3, welches über die Kupplungsklauen 31 in Eingriff mit den Nocken 71 des Mitnehmers 7 steht. Sowohl das Kupplungsstück 3 als auch der Mitnehmer 7 sind wie in Figur 2 gezeigt von dem Bremsring 4 umgeben, an dessen werkzeugseitigem Ende sich eine Rastenscheibe 9 anschließt. Dabei sind das Kupplungsstück 3 und der Mitnehmer 7 bei antriebsseitiger Drehung der längsverzahnten Hülse 8 gegenüber dem Bremsring 4 verdrehbar. Auf der Rastenscheibe 9 gleitet im Schlagbetrieb ein nicht dargestelltes, werkzeugseitiges, analog ausgebildetes Teil rotierend ab, wodurch es zu axial oszillierenden Bewegungen des Werkzeuges und dadurch zu den erwünschten Schlägen kommt. Erfindungsgemäß ist der Bremsring 4 mit der Rastenscheibe einstückig 9 ausgebildet. Bremsring 4 und Rastenscheibe 9 sind im eingebauten Zustand fest mit dem Gehäuse der Handwerkzeugmaschine verbunden.

Die gezeigte Baueinheit kann auf der werkzeugabgewandten Seite durch einen Seegerring 10 in Verbindung mit einer Scheibe 11 fettdicht abgeschlossen sein.

Figur 3 verdeutlicht in einer perspektivischen Darstellung die kompakte, integrierte Ausführung der erfindungsgemäßen Mitnahme-/Blockiereinrichtung 1. Dabei sind die Komponenten der in Figur 3 dargestellten Mitnahme-/Blockiereinrichtung 1 entsprechend den vorangegangenen Figuren benannt. Erkennbar aus Figur 3 wird, dass sich die erfindungsgemäße Mitnahme-/Blockiereinrichtung 1 gut dazu eignet, zunächst vormontiert und anschließend in ein Gehäuse einer Handwerkzeugmaschine eingesetzt zu werden, wodurch sich die Endmontage einer mit der erfindungsgemäßen Mitnahme-/Blockiereinrichtung 1 ausgestatteten Handwerkzeugmaschine erheblich vereinfacht.

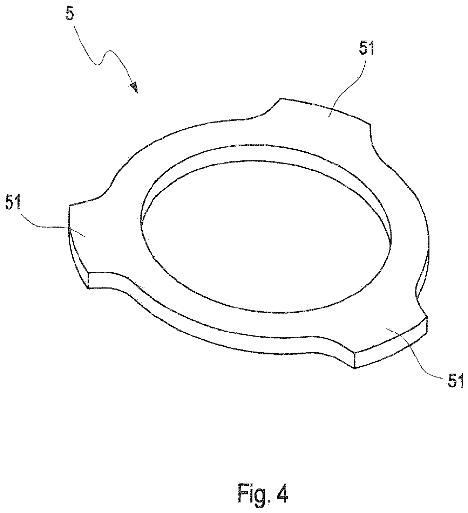

Figur 4 zeigt in einer perspektivischen Ansicht eine Steuerscheibe 5, wie sie in der vorliegenden Erfindung zum Einsatz kommen kann. Die Steuerscheibe 5 ist dabei beispielsweise als Metallsinterteil oder Stanzteil ausgebildet und zeigt eine Dicke im Bereich von 1 mm bis 2 mm, insbesondere 1,5 mm. Der Innendurchmesser der Steuerscheibe kann zwischen 10 mm und 15 mm, insbesondere 13 mm betragen; ferner kann der Außendurchmesser im Bereich zwischen den Nocken 51 zwischen 15 und 20 mm, insbesondere ca. 17 mm betragen.

## Patentansprüche

1. Elektrohandwerkzeug, mit einem Gehäuse, einer motorisch antreibbaren Antriebseinheit (2), einer Abtriebseinheit (7), einer Rastenscheibe (9) und einer Mitnahme/Blockiereinrichtung (1), wobei die Mitnahme/Blockereinrichtung (1) Klemmkörper (6,6') sowie zugeordnete gehäusefeste Klemmflächen (41) und mit der Antriebseinheit (2) gekoppelte Mitnahmeelemente (31) umfasst und bei antriebsseitigem Antrieb eine Drehmomentübertragung von der Antriebseinheit (2) über die Mitnahmeelemente (31), über die Klemmkörper (6,6') auf einen Nocken (71) der Abtriebseinheit (7) erfolgt und bei werkzeugseitigem Antrieb eine Blockierung der Abtriebseinheit (7) unter Klemmung wenigstens eines Klemmkörpers (6,6') zwischen einem Teil der Abtriebseinheit (7) und der Klemmfläche (41) erfolgt, wobei die Klemmflächen (41) auf der Innenseite eines gehäusefesten Bremsringes (4) angeordnet sind, und wobei die Abtriebseinheit (7) derart ausgebildet ist, dass ein Spalt zwischen der Außenseite der Abtriebseinheit (7) und der Innenseite des Bremsrings (4) sich zur Mitte eines Bereichs zwischen zwei Nocken (71) auf eine Breite hin verschmälert, die kleiner ist als der Durchmesser der Klemmkörper (6, 6'),
**dadurch gekennzeichnet, dass**
im Bereich mindestens eines Nockens (71) ein relativ zu dem Nocken verschiebbares Schiebeelement (51) vorhanden ist, das bei antriebsseitigem Antrieb mittels eines Mitnahmeelementes (31) einen auf der dem Mitnahmeelement (31) gegenüberliegenden Seite des Nockens (71) angeordneten Klemmkörper (6') in einem Abstand von dem Nocken (71) positioniert, dass das Schiebeelement (51) als Fortsatz am äußeren Umfang einer konzentrisch zur Abtriebseinheit (7) angeordneten Steuerscheibe (5) angeordnet ist, wobei der Bremsring (4) einstückig mit der Rastenscheibe (9) ausgebildet und fest mit dem Gehäuse des Elektrohandwerkzeugs verbunden ist,
**dadurch gekennzeichnet,**
**dass** auf der Rastenscheibe (9) im Schlagbetrieb des Elektrohandwerkzeugs ein werkzeugseitiges, analog ausgebildetes Teil rotierend abgleitet, wodurch es zu axial oszillierenden Bewegungen des Werkzeuges und dadurch zu den erwünschten Schlägen kommt, und
**dass** die Steuerscheibe eine Dicke im Bereich von 1-2 mm, insbesondere im Bereich von 1,5mm aufweist

2. Elektrohandwerkzeug nach Anspruch 1,
**dadurch gekennzeichnet, dass** die Steuerscheibe (5) als einstückiger Körper mit ringförmiger Grundform ausgebildet ist.

3. Elektrohandwerkzeug nach einem der Ansprüche 1 oder 2,
**dadurch gekennzeichnet, dass** drei Schiebeelemente (51) gleichmäßig über den äußeren Umfang der Steuerscheibe (5) verteilt angeordnet sind.

4. Elektrohandwerkzeug nach einem der vorangehenden Ansprüche,
**dadurch gekennzeichnet, dass** die Klemmkörper (6,6') als Walzen ausgebildet sind.

5. Elektrohandwerkzeug nach einem der vorangehenden Ansprüche, **dadurch gekennzeichnet, dass** es sich bei dem Elektrohandwerkzeug um eine Bohr- oder Schraubmaschine handelt.

## Claims

1. Portable electric power tool, having a housing, a motor-driven drive unit (2), a drive-output unit (7), a notched disc (9) and an entrainment/blocking device (1), wherein the entrainment/blocking device (1) comprises clamping bodies (6, 6') and associated clamping surfaces (41) fixed to the housing, and entrainment elements (31) coupled to the drive unit (2), and in the event of driving from the drive side, torque is transmitted from the drive unit (2) to a cam (71) of the drive-output unit (7) via the entrainment elements (31), via the clamping bodies (6, 6'), and in the event of driving from the tool side, the drive-output unit (7) is blocked with at least one clamping body (6, 6') being clamped between a part of the drive-output unit (7) and the clamping surface (41), wherein the clamping surfaces (41) are arranged on the inner side of a brake ring (4) fixed to the housing, and wherein the drive-output unit (7) is configured such that a gap between the outer side of the drive-output unit (7) and the inner side of the brake ring (4) narrows towards the middle of a region between two cams (71) to a width which is smaller than the diameter of the clamping bodies (6, 6'),
**characterized in that**,
in the region of at least one cam (71), a sliding element (51) that is displaceable relative to the cam is present, said sliding element (51), in the event of driving from the drive side by means of an entrainment element (31), positions a clamping body (6') arranged on the opposite side of the cam (71) from the entrainment element (31) at a distance from the cam (71), **in that** the sliding element (51) is arranged as an extension on the outer circumference of a control disc (5) arranged concentrically with the drive-output unit (7), wherein the brake ring (4) is formed integrally with the notched disc (9) and is firmly connected to the housing of the portable electric power tool,
**characterized**
**in that**, on the notched disc (9), a tool-side, analogously formed part slides in a rotating manner during percussive operation of the portable electric power tool, resulting in axially oscillating movements of the tool and as a result in the desired impacts, and in that the control disc has a thickness in the range of 1-2 mm, in particular in the region of 1.5 mm.

2. Portable electric power tool according to Claim 1,
**characterized in that** the control disc (5) is in the form of a one-piece body with an annular basic shape.

3. Portable electric power tool according to either of Claims 1 and 2,
**characterized in that** three sliding elements (51) are arranged in a manner distributed regularly around the outer circumference of the control disc (5).

4. Portable electric power tool according to one of the preceding claims,
**characterized in that** the clamping bodies (6, 6') are in the form of rollers.

5. Portable electric power tool according to one of the preceding claims,
**characterized in that** the portable electric power tool is a drilling or screwing machine.

## Revendications

1. Outil manuel électrique, comprenant un boîtier, une unité d'entraînement motorisée (2), une unité de déviation (7), un disque à crans (9) et une installation d'entraînement/blocage (1), dans lequel l'installation d'entraînement/blocage (1) comporte des organes de serrage (6, 6') ainsi que des surfaces de serrage (41) adaptées, fixées au boîtier, et avec laquelle l'unité d'entraînement (2) englobe des éléments d'entraînement (31) couplés, et par un entraînement du côté de l'entraînement, une transmission du moment de rotation par l'unité d'entraînement (2) est effectuée par l'intermédiaire des éléments d'entraînement (31), des organes de serrage (6, 6') sur une came (71) de l'unité de déviation (7), et, lors de l'entraînement du côté de l'outillage, un blocage de l'unité de déviation (7), par serrage d'au moins un organe de serrage (6, 6') entre une partie de l'unité de déviation (7) et la surface de serrage (41) est réalisé,
dans lequel les surfaces de serrage (41) sont disposées sur la surface intérieure d'un anneau de freinage (4), et dans lequel l'unité de déviation (7) est réalisée de telle manière qu'une fente entre l'unité de déviation (7) et la face intérieure de l'anneau de freinage (4) se rétrécit vers le milieu d'un secteur situé entre deux cames (71) sur une largeur qui est plus petite que la section des organes de serrage (6, 6'),
**caractérisé en ce que**,
dans le domaine d'au moins une came (71), un élément (51) est disponible, coulissant relativement à la came, qui, lors de l'entraînement du côté entraîné d'un élément d'entraînement (31), positionne du côté opposé de l'organe de serrage (6') de la face opposée de la came (71), à une distance de la came (71), **en ce que** l'élément coulissant (51) est disposé comme une protubérance à la périphérie extérieure de l'unité de déviation extérieure (7) concentrique d'un disque de guidage (5), dans lequel l'anneau de freinage (4) est réalisé d'une pièce avec le disque à crans (9) et est lié de façon rigide avec le boîtier de l'outil manuel électrique,
**caractérisé en ce que**,
sur le disque à crans (9) dans l'entraînement de frappe de l'outil manuel électrique, se trouve montée une partie confectionnée en rotation indifférente, disposée du côté de l'outillage, conduisant à des mouvements de rotation de l'outillage et aboutissant aux coups de frappe souhaités, et **en ce que** l'anneau de guidage a une épaisseur de l'ordre de 1 à 2 mm, en particulier de l'ordre de 1,5 mm.

2. Outil manuel électrique selon la revendication 1,
**caractérisé en ce que**, le disque de commande (5) est réalisé sous la forme d'un corps en une pièce ayant une forme de base annulaire.

3. Outil manuel électrique selon l'une des revendications 1 ou 2,
**caractérisé en ce que**, trois éléments coulissants (51) sont disposés régulièrement par-dessus le périmètre extérieur du disque de commande (5).

4. Outil manuel électrique selon l'une des revendications précédentes,
**caractérisé en ce que**, les organes de serrage (6, 6') sont réalisés sous la forme de rouleaux.

5. Outil manuel électrique selon l'une des revendications précédentes,
**caractérisé en ce que**, l'outil manuel électrique est constitué d'une perceuse ou d'une visseuse.
